# EUROPÄISCHE PATENTSCHRIFT

(11) **EP 0 995 959 B1**
(45) Veröffentlichungstag und Bekanntmachung des Hinweises auf die Patenterteilung: **15.11.2006**
(21) Anmeldenummer: 99118808.7
(22) Anmeldetag: 23.09.1999
(51) Int. Cl.: F26B 21/12, F26B 17/14

(54) **Trocknungsvorrichtung zum Trocknen von schüttfähigem Material**
Drying apparatus for drying bulk material
Dispositif de séchage pour sécher de matériau en vrac

(30) Priorität: 20.10.1998 DE 19848140
(43) Veröffentlichungstag der Anmeldung: 26.04.2000
(73) Patentinhaber: Wilhelm, Klaus, 83022 Rosenheim (DE)
(72) Erfinder: Wilhelm, Klaus, 83022 Rosenheim (DE)
(74) Vertreter: Alber, Norbert

(56) Entgegenhaltungen:
- WO-A-98/55284
- DE-A- 3 929 858
- DE-U- 29 621 313
- US-A- 4 360 976
- US-A- 4 413 426
- US-A- 4 441 261
- US-A- 5 182 871
- "SECHAGE" REVUE GENERALE DES CAOUTCHOUCS ET PLASTIQUES, SOCIETE D'EXPANSION TECHNIQUE ET ECONOMIQUE. PARIS, FR, Bd. 67, Nr. 699, 1. Oktober 1990 (1990-10-01), Seiten 100-111, XP000287441 ISSN: 1154-1105

## Beschreibung

Die Erfindung betrifft eine Trocknungsvorrichtung zum Trocknen von schüttfähigem Material, insbesondere Kunststoffgranulat oder -pulver, gemäß dem Oberbegriff des Anspruchs 1. Eine solche Vorrichtung ist aus der Druckschrift US-A-4441261 bekannt.

Vor allem in der kunststoffverarbeitenden Industrie müssen Rohstoffe in der Form von Granulat, Pulver oder einem ähnlichen schüttfähigen Zustand häufig getrocknet werden, bevor sie beispielsweise in einer Kunststoffspritzgußmaschine oder einem Extruder verarbeitet werden. Hierzu sind Heißgastrockner bekannt, bei denen das zur Trocknung verwendete Gas vor dem Trockenvorgang auf eine kunststoffspezifische Temperatur aufgeheizt und das heiße Gas durch das zu trocknende Gut geleitet wird.

Um eine effektive Trocknung einerseits und eine unnötige Energieverschwendung oder Beschädigung des zu trocknenden Materials zu vermeiden, ist es erforderlich, das durch das Material strömende Trocknungsgas innerhalb des Trocknungsbehälters auf einer bestimmten Temperatur zu halten. Hierzu ist aus der DE 296 21 313 U1 eine Schalt- und Regeleinrichtungen bekannt, welche die Temperatur am Auslaß des Trocknungsbehälters mittels eines Temperaturfühlers mißt, der mit einem in der Gaszufuhrleitung angeordneten Thermostat (Durchflußregelventil) zusammenwirkt. Steigt die Temperatur am Auslaß des Trocknungsbehälters an, beispielsweise weil eine Störung aufgetreten ist und das erwärmte Kunststoffmaterial nicht mehr aus dem Trocknungsbehälter abgeführt wird, verringert das Thermostat die Gasweiterleitung zum Trocknungsbehälter. Sinkt die Gasauslaßtemperatur unterhalb eines bestimmten Wertes, wird der Gasvolumenstrom zum Trocknungsbehälter erhöht.

Nachteilig ist hierbei jedoch, daß thermostatisch geregelte Ventile, die genau arbeiten, sehr teuer sind und daher insbesondere für kleinere Trocknungsanlagen nicht in Frage kommen. Bei bekannten Trocknungsanlagen werden daher üblicherweise kostengünstige, jedoch sehr ungenaue thermostatisch geregelte Ventile zur Volumenstromregelung des Trocknungsgases eingesetzt. Bekannte thermostatisch geregelte Ventile, die über eine Kapillarrohrverbindung mit dem Temperaturfühler in Verbindung stehen, sprechen darüberhinaus sehr träge auf Temperaturänderungen an. Eine schnelle Korrektur des Gasvolumenstroms ist daher nicht möglich. Insbesondere bei kleinen Trocknungsgasvolumenströmen von unter 1000 l/min reagieren die bekannten Thermostatregler träge und führen damit zu einer ungenauen Prozesssteuerung. Nachteilig ist weiterhin, dass sich mit den bekannten Thermostatreglern keine trockengutspezifischen Trockengasströme, d. h. verschiedene Trockenprogramme, vorwählen lassen, wie sie z. B. für unterschiedliche Kunststofftypen, wie ABS oder PET, notwendig sind.

So ist beispielsweise aus der US-A-4441 261 eine gattungsgemäße Trocknungsvorrichtung bekannt, bei der allerdings in den einzelnen Zufuhrleitungen für die Trocknungsluft in den Schüttgutbehälter Proportionalventile verwendet werden, die nicht nur einen Wechsel zwischen den beiden Schaltstellungen offen/geschlossen ermöglichen und sehr viel aufwendiger sind. Eine leichte Abnehmbarkeit der Steuer- und Regeleinheit von dem Schüttgutbehälter ist dabei nicht vorgesehen.

Neben diesem nächstreichenden Stand der Technik zeigt die Literaturstelle "SECHAGE" REVUE GENERALE DES CAOUTCHOUCS ET PLASTIQUES, SOCIETE D'EXPANSION TECHNIQUE ET ECONOMIQUE, Paris, FR, Bd. 67, Nr. 699, 1. Oktober 1990 auf Seite 110 mittlere Spalte eine Trocknungsvorrichtung, bei der Trocknungsbehälter einerseits sowie die Schalt- und Regeleinrichtung andererseits offensichtlich als separate bauliche Einheiten ausgeführt sind.

Der Erfindung liegt daher die Aufgabe zugrunde, eine Trocknungsvorrichtung der eingangs genannten Art zu schaffen, mit der sich der in den Trocknungsbehälter einzuleitende Trocknungsgasvolumenstrom auf sehr genaue, schnelle und einfache weise sowie variabel einsetzbar regeln lässt.

Diese Aufgabe wird erfindungsgemäß durch die Merkmale des Anspruchs 1 gelöst. Vorteilhafte Ausführungsformen der Erfindung sind in den weiteren Ansprüchen beschrieben.

Erfindungsgemäß besteht die Volumenstromeinstellrichtung aus mindestens zwei Durchflussabsperr- /Freigabeeinrichtungen, die in mindestens zwei parallel geschalteten Zweigleitungen der Gaszufuhrleitung angeordnet und von der Schalt- und Regeleinrichtung zwischen einer geöffneten und geschlossenen Stellung umschaltbar sind, so dass der in den Aufnahmeraum eingeleitete Trocknungsgasvolumenstrom durch die Anzahl und/oder Auswahl der geöffneten Durchflussabsperr- /Freigabeeinrichtungen bestimmt ist.

Die erfindungsgemäße Trocknungsvorrichtung weist zweckmäßigerweise ein mehrkanaliges Zwischenstück in der Gaszufuhrleitung auf, wobei in jeder Zweigleitung eine Durchflussabsperr- /Freigabeeinrichtung, beispielsweise in der Form eines Elektromagnetventils, angeordnet ist. Diese Durchflussabsperr- /Freigabeeinrichtungen sind lediglich zwischen einer geöffneten und einer geschlossenen Stellung umschaltbar und können daher sehr einfach und kostengünstig aufgebaut sein. Der in den Trocknungsbehälter eingeleitete Trocknungsgasvolumenstrom bestimmt sich dadurch, wie viele und/oder welche dieser Durchflussabsperr- /Freigabeeinrichtungen geöffnet sind. Eine weitere Variation des Volumenstroms ergibt sich dadurch, dass die Durchflussabsperr- /Freigabeeinrichtung gemäß einer vorteilhaften Ausführungsform unterschiedlich große Durchlassöffnungen, aufweisen. Verwendet man z. B. vier parallel geschaltete Elektromagnetventile mit unterschiedlich großen Durchlassöffnungen können 15 verschiedene Trocknungsgasvolumenströme (zzgl. Dem Null-Volumenstrom, bei dem alle Ventile geschlossen sind) zur Folge haben.

Anstelle von Elektromagnetventilen ist es auch möglich, die Durchflussabsperr- /Freigabeeinrichtung in anderer Weise, beispielsweise in der Form von Schieberplatten, auszubilden.

Die Schalt- und Regeleinrichtung ist mit den Durchflussabsperr-/Freigabeeinrichtungen schnell und leicht abnehmbar am Trocknungsbehälter gehaltert. Dies bietet den Vorteil, dass mit einer bestimmten Schalt- und Regeleinrichtung unterschiedliche Trocknungsbehälter, die für bestimmte Materialien optimal geeignet sind, kombiniert werden können.

Gemäß einer vorteilhaften Ausführungsform sind in der Schalt- und Regeleinrichtung verschiedene Trocknungsprogramme gespeichert, mit denen vorbestimmte Kombinationen von geöffneten und geschlossenen Durchflußabsperr-/Freigabeeinrichtungen auswählbar sind. Dies bietet den Vorteil, daß für verschiedene zu trocknende Materialien, insbesondere für verschiedene Kunststoffarten, spezifische, optimal angepaßte Volumenstromprogramme gefahren werden können.

Die Erfindung wird nachfolgend anhand der Zeichnungen beispielhaft näher erläutert. In diesen zeigen:
- Figur 1 :: eine schematische Darstellung einer nicht erfindungsgemäßen Trocknungsvorrichtung, wobei die Schalt- und Regeleinrichtung an den Trocknungsbehälter angebaut ist, und
- Figur 2 :: eine Ausführungsform der erfindungsgemäßen Trocknungsvorrichtung, wobei die Schalt- und Regeleinrichtung vom Trocknungsbehälter abnehmbar ist.

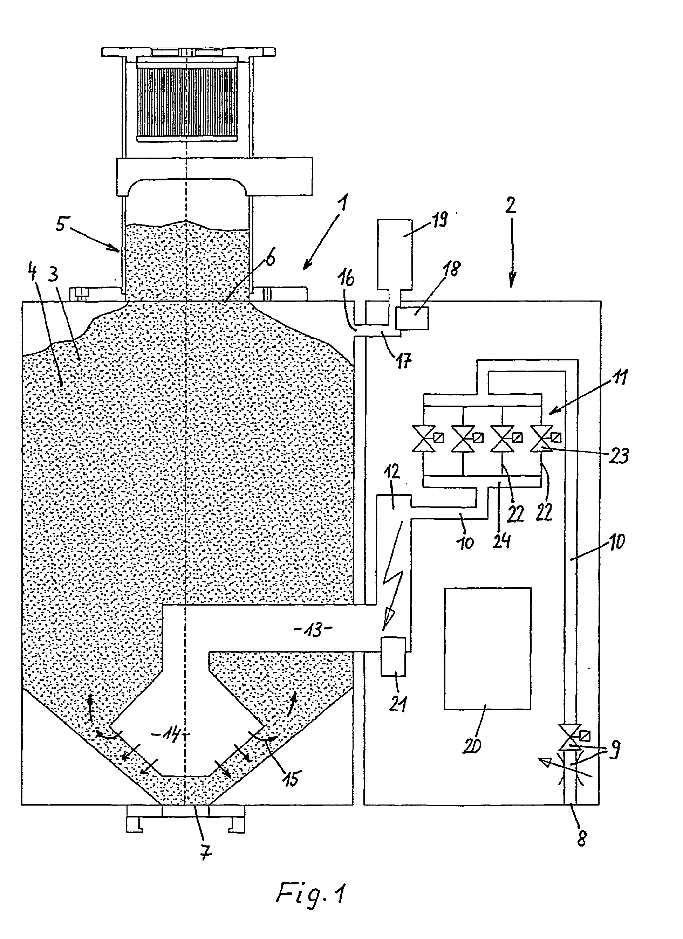

Aus Figur 1 ist eine Trocknungsvorrichtung ersichtlich, die im wesentlichen aus einem Trocknungsbehälter 1 und einer Schalt- und Regeleinrichtung 2 besteht.

Der Trocknungsbehälter 1 weist einen innenliegenden Aufnahmeraum 3 zur Aufnahme von schüttfähigem Material 4 auf, beispielsweise Kunststoffgranulat oder Kunststoffpulver. Das Material 4 kann in bekannter Weise über ein auf dem Trocknungsbehälter 1 aufgesetztes Fördergerät 5 und eine an der Oberseite des Trocknungsbehälters 1 vorgesehene Materialeinlaßöffnung 6 in den Aufnahmeraum 3 eingebracht werden.

An der Unterseite des Trocknungsbehälters 1 befindet sich eine Materialauslaßöffnung 7, durch welche das Material 4 nach dem Trocknen aus dem Aufnahmeraum 3 nach unten entfernt werden kann. Beispielsweise ist es möglich, die Trocknungsvorrichtung auf eine Kunststoffspritzmaschine oder auf einen Extruder aufzusetzen, so daß das Material 4 von der Materialauslaßöffnung 7 in die weiterverarbeitende Maschine oder einen entsprechenden Materialtransportkanal geleitet wird.

Das Trocknen des Materials 4 innerhalb des Trocknungsbehälters 1 erfolgt mittels eines erwärmten Trocknungsgases, insbesondere mittels erwärmter Luft. Hierzu weist die Schalt- und Regeleinrichtung 2 einen Druckluftanschluß 8 auf, der an ein übliches Druckluftnetz angeschlossen werden kann. Mittels eines nachfolgenden Einlaß- und Druckminderventils 9 wird der im Druckluftnetz vorherrschende hohe Druck von beispielsweise 7 bar auf den für zur Trocknungsvorrichtung erforderlichen Betriebsdruck eingestellt. Vom Einlaß- und Druckminderventil 9 strömt das Gas über eine Gaszufuhrleitung 10 und eine nachfolgend noch näher beschriebene Volumenstromeinstelleinrichtung 11 zu einer Heizeinrichtung 12, wo die Luft auf eine Temperatur von beispielsweise 100° bis 150° C erwärmt wird. Die Höhe der Temperatur hängt vom zu trocknenden Material ab und kann variiert werden. Als Heizeinrichtung 12 können übliche bekannte Heizeinrichtungen, beispielsweise Elektroheizungen oder Heißdampfheizungen, verwendet werden.

Bei dem gezeigten Ausführungsbeispiel ist die Heizeinrichtung 12 innerhalb der Schalt- und Regeleinrichtung 2 angeordnet. Es ist jedoch durchaus möglich, die Heizeinrichtung 12 außerhalb der Schalt- und Regeleinrichtung 2, beispielsweise zwischen dieser und dem Trocknungsbehälter 1, anzuordnen.

Von der Heizeinrichtung 12 strömt das erwärmte Trocknungsgas in ein Luftverteilerrohr 13, das sich von der Außenwand des Trocknungsbehälters 1 bis zur vertikalen Mittelachse des Trocknungsbehälters 1 erstreckt. Der Luftverteilerkonus 14 befindet sich in einem bodennahen Bereich des Trocknungsbehälters 1 und weist perforierte Außenwände auf, so daß die Trocknungsluft in Richtung der Pfeile 15 austreten und nach oben durch das Material 4 hindurch strömen kann. Hierdurch wird das Material 4 getrocknet.

Im oberen Bereich des Trocknungsbehälters 1 ist ein Auslaß 16 vorgesehen, durch den das Trocknungsgas nach dem Durchströmen des Materials 4 wieder aus dem Aufnahmeraum 3 abgeführt wird. Vom Auslaß 16 des Trocknungsbehälters 1 führt eine Gasauslaßleitung 17 zurück in die Schalt- und Regeleinrichtung 2. In der Gasauslaßleitung 17 ist ein Auslaßtemperaturfühler 18 für das austretende Trocknungsgas vorgesehen. Am Ende der Gasauslaßleitung 17 befindet sich ein Filter 19, über den das Trocknungsgas entweder in die Atmosphäre abgeführt oder über eine entsprechende, nicht dargestellte, Rückführleitung wieder der Gaszufuhrleitung 10 zugeführt wird.

Die Temperatur innerhalb des Trocknungsbehälters 1 wird über den Trocknungsgasvolumenstrom eingestellt, der über die Gaszufuhrleitung 10 dem Trocknungsbehälter 1 zugeführt wird. Zur Regelung des Trocknungsgasvolumenstroms ist in der Schalt- und Regeleinrichtung 2 ein als Temperaturregler wirkender Prozessor 20 vorgesehen, der mit dem Auslaßtemperaturfühler 18 und der Volumenstromeinstelleinrichtung 11 zusammenwirkt. Die Volumenstromeinstellung erfolgt in Abhängigkeit der am Auslaßtemperaturfühler 18 gemessenen Temperatur des auströmenden Trocknungsgases. Ist die Temperatur zu niedrig, wirkt der Prozessor 20 auf die Volumenstromeinstelleinrichtung 11 derart ein, daß der Volumenstrom des Trocknungsgases erhöht wird. Bei zu hoher Auslaßtemperatur wird der Volumenstrom entsprechend verringert. Hierzu teilt sich die Gaszufuhrleitung 10 im Bereich der Volumenstromeinstelleinrichtung 11 bei dem gezeigten. Beispiel in vier zueinander parallel geschaltete Zweigleitungen 22, in denen sich jeweils eine Durchflußabsperr-/Freigabeeinrichtung in der Form eines Elektromagnetventils 23 befindet. Die Elektromagnetventile 23 können den Durchfluß des Trocknungsgases durch die jeweiligen Zweigleitungen 22 öffnen oder schließen. Die einzelnen Zweigleitungen 22 münden nach dem Elektromagnetventil 23 wieder in die gemeinsame Gaszufuhrleitung 10, um das Gas der Heizeinrichtung 12 zuzuführen.

Die Elektromagnetventile 23 können vom Prozessor 20 einzeln zwischen ihrer Durchlaß- und Absperrstellung umgeschaltet werden. Wie ersichtlich, hängt der Gasvolumenstrom, der dem Trocknungsbehälter 1 zugeführt wird, davon ab, wie viele Elektromagnetventile 23 geöffnet sind. Sind alle vier Elektromagnetventile geschlossen, ist die Gaszufuhr zum Trocknungsbehälter 1 vollständig abgesperrt. Sind alle vier Elektromagnetventile 23 geöffnet, ist der zugeführte Gasvolumenstrom maximal. Weisen die Elektromagnetventile 23 gleichgroße Durchlaßöffnungen auf, können auf diese Weise vier verschieden große Volumenströme eingestellt werden.

Eine weitere Variationsmöglichkeit für die Volumenstromeinstellung ergibt sich, wenn die Elektromagnetventile 23 und/oder die Zweigleitungen 22 unterschiedlich große Durchflußöffnungen haben. Bei einer derartigen Ausgestaltung ergeben sich (einschließlich des vollkommen geschlossenen Zustandes) 2⁴ = 16 verschiedene Gasvolumenströme. Die Höhe des Gasvolumenstroms hängt hier somit nicht nur von der Anzahl der geöffneten Elektromagnetventile 23, sondern auch davon ab, welche Elektromagnetventile 23 geöffnet und welche geschlossen sind.

In der Schalt- und Regeleinrichtung 2, d.h. im Prozessor 20, sind verschiedene Trocknungsprogramme gespeichert, mit denen vorbestimmte Kombinationen von geöffneten und geschlossenen Elektromagnetventilen 23 auswählbar sind. Dadurch wird es möglich, schon im Vorfeld für das zu trocknende Material 4 spezifische Gasvolumenströme vorzuwählen und je nach Kontinuität des Materialdurchsatzes diese Gasvolumenströme konstant zu halten oder z.B. bei Produktionsunterbrechung auf ein anderes Gasvolumenstromniveau herunter- oder hinaufzuschalten.

Die Soll-Temperatur für das Trockengas wird trockengutspezifisch über einen Einlaßtemperaturfühler 21 in Verbindung mit dem Prozessor 20 eingestellt. Über den Auslaßtemperaturfühler 18 werden Abweichungen von der Soll-Austrittstemperatur festgestellt und programmspezifisch die Gasvolumenströme korrigiert.

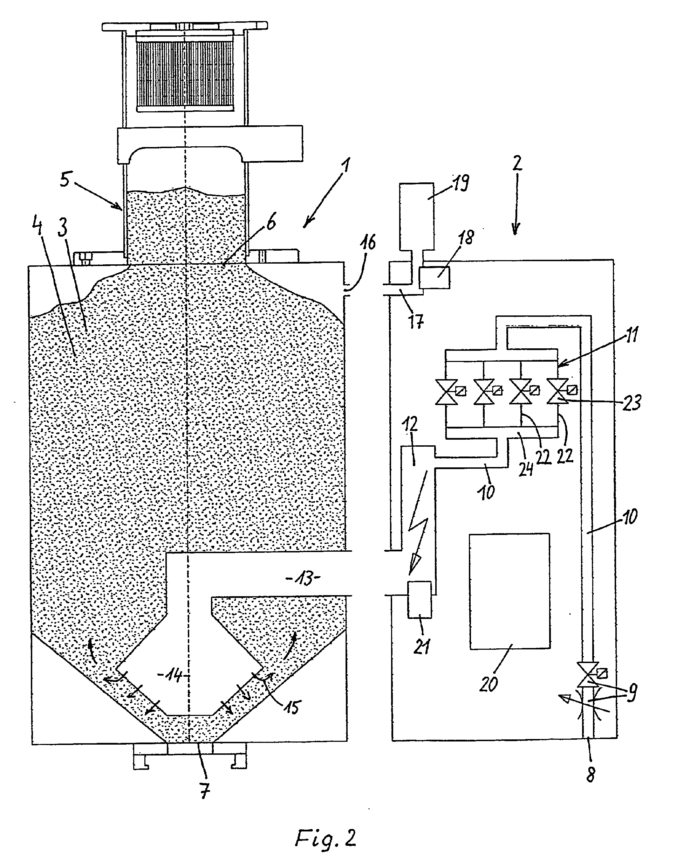

Figur 2 zeigt eine Ausführungsform der erfindungsgemäßen Trocknungsvorrichtung. Diese Ausführungsform ist weitgehend zu derjenigen von Figur 1 identisch. Der einzige Unterschied besteht darin, daß die Schalt- und Regeleinrichtung 2 abnehmbar am Trocknungsbehälter 1 gehaltert ist. Hierbei sind am Trocknungsbehälter 1 und an der Schalt- und Regeleinrichtung 2 jeweils nicht näher dargestellte lösbare Kopplungselemente für die Gaszufuhrleitung 10 und die Gasauslaßleitung 17 vorgesehen. Die Kopplungselemente sind zweckmäßigerweise so beschaffen, daß ein sehr schnelles und einfaches Ankoppeln und Lösen der Schalt- und Regeleinrichtung 2 vom Trocknungsbehälter 1 möglich ist.

## Patentansprüche

1. a) Trocknungsvorrichtung zum Trocknen von schüttfähigem Material, insbesondere Kunststoffgranulat oder - pulver,
b) mit einem einen Aufnahmeraum (3) für das zu trocknende Material (4) aufweisenden Trocknungsbehälter (1),
c) einer Gaszufuhrleitung (10) zum Einleiten von Trocknungsgas in den Trocknungsbehälter (1),
d) einem Auslass (16) zum Abführen des eingeleiteten Trocknungsgases,
e) einer Schalt- und Regeleinrichtung (2) zum Regeln des einzuleitenden Trocknungsgas-Volumenstroms mittels
f) einer in der Gaszufuhrleitung (10) angeordneten Volumenstromeinrichtung (11), wobei
g) die Volumenstromeinstelleinrichtung (11) aus mindestens zwei Durchflussabsperr-/Freigabeeinrichtungen besteht,
i) die in mindestens zwei parallel geschalteten Leitungszeigen (22) der Gaszufuhrleitung (10) angeordnet und
h) von der Schalt- und Regeleinrichtung (2) zwischen einer geöffneten und einer geschlossenen Stellung umschaltbar sind,
k) so dass der in den Aufnahmeraum (3) eingeleitete Trocknungsgas-Volumenstrom durch die Anzahl und/oder Auswahl der geöffneten Durchflussabsperr-/Freigabeeinrichtungen bestimmt ist,
**dadurch gekennzeichnet, dass**
l) die Schalt- und Regeleinrichtung (2) mit den Durchflussabsperr-/Freigabeeinrichtungen abnehmbar am Trocknungsbehälter (1) gehaltert ist.
m) an der Schalt- und Regeleinrichtung (2) jeweils lösbare Kopplungselemente für die Gaszufuhrleitung (10) und die Gasauslassleitung (17) vorgesehen sind, die ein sehr schnelles und einfaches Ankoppeln und Lösen der Schalt- und Regeleinrichtung (2) vom Trocknungsbehälter (1) ermöglichen.

2. Trocknungsvorrichtung nach Anspruch 1, **dadurch gekennzeichnet, daß** die Durchflußabsperr-/Freigabeeinrichtungen aus Elektromagnetventilen (23) bestehen.

3. Trocknungsvorrichtung nach Anspruch 1 oder 2, **dadurch gekennzeichnet, daß** die Durchflußabsperr-/Freigabeeinrichtungen unterschiedlich große Durchlaßöffnungen haben.

4. Trocknungsvorrichtung nach einem der vorhergehenden Ansprüche, **dadurch gekennzeichnet, daß** in der Schalt- und Regeleinrichtung (2) verschiedene Trocknungsprogramme gespeichert sind, mit denen vorbestimmte Kombinationen von geöffneten und geschlossenen Durchflußabsperr-/Freigabeeinrichtungen auswählbar sind.

## Claims

1. a) A drying device for drying free flowing material, in particular plastic granulate - or powder,
b) comprising a drying container (1) having a receiving space (3) for the material (4) to be dried,
c) a gas supply line (10) for supplying drying gas to the drying container (1),
d) an outlet (16) for removing the inducted drying gas,
e) a switching- and control unit (2) for controlling the drying gas volume flow to be inducted through
f) a volume flow adjustment device (11) located in the gas supply line (10), wherein
g) the volume flow adjustment device (11) comprises at least two flow cut off- / release devices,
i) located in at least two parallel flow indicators (22) of the gas supply line (10) and
h) switchable between an open and a closed position by the switching-and control unit (2)
k) so that the drying gas volume flow inducted into the receiving space (3) is determined by the number and / or the selection of the open flow cut off- / release devices,
**characterized in, that**
I) the switching- and control unit (2) including the flow cut off- / release devices is mounted to the drying container (1) in a detachable manner.
m) removable coupling elements for the gas supply line (10) and the gas exhaust line (17) are provided at the switching- and control unit (2), allowing a very fast connection and disconnection of the switching- and control unit (2) from the drying container (1).

2. A drying device according to claim 1,
**characterized in, that**
the flow cut off- / release devices comprise electromagnetic valves (23).

3. A drying device according to claim 1 or 2,
**characterized in, that**
the flow cut off- / release valves have flow through openings with different sizes.

4. A drying device according to one of the preceding claims,
**characterized in, that**
in the switching- and control unit (2) various drying programs are stored, through which predetermined combinations of open and closed flow cut off- /release devices can be selected.

## Revendications

1. a) Dispositif de séchage pour le séchage de matériau en vrac, en particulier de granulés ou poudres de matière synthétique,
b) comprenant un conteneur de séchage (1) présentant une chambre de réception (3) pour le matériau à sécher (4),
c) une conduite d'amenée de gaz (10) pour l'introduction de gaz de séchage dans le conteneur de séchage (1),
d) une sortie (16) pour l'évacuation du gaz de séchage introduit,
e) un dispositif de réglage et de commande (2) pour le réglage du courant de volume de gaz de séchage au moyen
f) d'un dispositif de réglage de courant volumique (11) disposé dans la conduite d'amenée de gaz (10),
g) le dispositif de réglage de courant volumique (11) se composant d'au moins deux dispositifs de libération/blocage de débit,
i) qui sont disposés dans au moins deux ramifications (22) montées en parallèle de la conduite d'amenée de gaz (10) et
h) sont commutables par le dispositif de commande et de réglage (2) entre une position ouverte et une position fermée,
k) de sorte que le courant volumique introduit dans la chambre de réception (3) est déterminé par le nombre et/ou la sélection des dispositifs de libération/blocage de débit ouverts
**caractérisé en ce que**
1) le dispositif de commande et de réglage (2) est fixé de manière amovible sur le conteneur de séchage (1) avec les dispositifs de libération/blocage de débit,
m) il est prévu sur le dispositif de commande et de réglage (2) respectivement des éléments de couplage amovibles pour la conduite d'amenée de gaz (10) et la conduite de sortie de gaz (17) qui permettent un accouplement et un désaccouplement très rapides et simples du dispositif de commande et de réglage (2) au conteneur de séchage (1).

2. Dispositif de séchage selon la revendication 1, **caractérisé en ce que** les dispositifs de libération/blocage de débit se composent de valves électromagnétiques (23).

3. Dispositif de séchage selon la revendication 1 ou 2, **caractérisé en ce que** les dispositifs de libération/blocage de débit ont des ouvertures de passage de différentes dimensions.

4. Dispositif de séchage selon l'une des revendications précédentes, **caractérisé en ce que** dans les dispositifs de commande et de réglage (2) sont stockés différents programmes de séchage qui permettent de sélectionner des combinaisons prédéterminées de dispositifs de libération/blocage de débit ouverts et fermés.
